# EUROPEAN PATENT SPECIFICATION

(11) **EP 4 393 360 B1**
(45) Date of publication and mention of the grant of the patent: **25.06.2025**
(21) Application number: 23219324.3
(22) Date of filing: 21.12.2023
(51) Int. Cl.: A47J 37/12

(54) **A FRYER COMPRISING A DISCHARGE ASSEMBLY**
FRITTEUSE MIT EINER ENTLADEANORDNUNG
FRITEUSE COMPRENANT UN ENSEMBLE DE DÉCHARGE

(30) Priority: 29.12.2022 CN 202211713892; 29.12.2022 CN 202223553917 U
(43) Date of publication of application: 03.07.2024
(73) Proprietor: Zhejiang Shaoxing Supor Domestic Electrical Appliance Co., Ltd., Shaoxing Zhejiang 312071 (CN)
(72) Inventor: LIU, Jianwu, Shaoxing (CN); LU, Yongzhu, Shaoxing (CN)
(74) Representative: LLR

(56) References cited:
- CN-A- 111 481 075
- CN-U- 201 481 152
- US-A1- 2017 258 271

## Description

The present invention relates to the technical field of cooking utensils, in particular but not limited to home or commercial fryers.

Fryers are widely used in kitchens in homes and restaurants for cooking food by frying. They generally comprise a housing and an inner pot arranged in the housing and used for holding oil and food. To separate food residues produced during frying from the used oil, it is known to provide an oil filtering means at the bottom of the inner pot, as well as an oil collector in communication with the oil filtering means inside the housing. Used oil is filtered and collected by means of the oil filtering means and the oil collector. The document US 2017/258271 A1 discloses a fryer.

In the existing fryer, after the oil collector is placed into the housing, the oil filtering means of the inner pot is generally opened by means of a knob. The transmission structure is relatively complicated and it is also inconvenient to operate. The cooperation between parts may easily fail due to improper handling, for example, removing the oil collector while the oil filtering means is still in an open state, thus causing oil leak.

An objective of the present invention is to overcome the above-described shortcomings of the prior art by providing a fryer that has a simplified structure and is easy to operate.

To this end, the present invention provides a fryer comprising a housing, a pot and an oil collector respectively arranged in the housing. The oil collector is arranged below the pot.

A discharge assembly is arranged between the pot and the oil collector. The fryer is characterized in that the discharge assembly comprises:
- an oil filter arranged at the bottom of the pot and comprising a spring valve having an open position and a closed position;
- an oil guide arranged on the oil collector and slidingly connected with the oil collector, the oil guide being capable of moving the spring valve from the closed position to the open position when sliding from a first position to a second position;
- a first button and a first return spring respectively connected with the oil guide, when being pressed, the first button being capable of pushing the oil guide from the first position to the second position by opposing a return force exerted by the first return spring on the oil guide;
- a locking assembly used for locking the oil guide in the second position;
- an unlocking assembly used for unlocking the locking assembly.

Thus, the present invention provides a fryer that uses a button as a filtering trigger means.

A user can push the oil guide horizontally to the second position where oil is filtered by pressing the first button. This operation is simple, convenient, and has a determined course, which prevents incorrect positioning of parts caused by improper handling. In addition, the locking assembly is provided to lock the oil guide. Further, the unlocking assembly is provided to unlock the locking assembly, enabling the user to stop oil filtering at any time and increasing the recognizability and repeatability of the operation of stopping oil filtering. Thus, the fryer according to the present invention is capable of achieving oil filtering and the stopping of oil filtering with a simpler structure and is convenient to handle with high repeatability.

According to a mode of realization, the locking assembly comprises a positioning pin arranged at the housing and a pin slot arranged at the oil guide. The positioning pin is configured to move when the oil guide moves, and to engage in the pin slot when the oil guide moves to the second position so as to lock the oil guide in the second position.

Thus, the locking of the oil guide in the second position is achieved by means of the insertion of the positioning pin in the pin slot. It is ensured that the spring valve of the oil filtered is in a stable open position until the user deems that oil filtering should be stopped. The duration of the oil filtering is thus controllable. According to a mode of realization, the positioning pin is movably mounted in the housing and extends downward into the course of the oil guide. In the oil guide's course of moving from the first position to the second position, the positioning pin is capable of moving relative to the housing and thus will not obstruct the smooth movement of the oil guide. At the second position of the oil guide, the positioning pin engages with the pin slot arranged on top of the oil guide, thus achieving the locking of the oil guide at a determined position. Of course, the location of the positioning pin and the pin slot can be interchanged. That is, the positioning is located at the oil guide while the pin slot is arranged at the housing. Alternatively, the positioning pin may be located at the housing below the oil guide and extends upward, while the pin slot is arranged at the bottom of the oil guide.

Optionally, the movement direction of the positioning pin is perpendicular to the movement direction of the oil guide. For example, when the oil guide is configured to move along a horizontal direction, the positioning pin is configured to move along a vertical direction. This arrangement has a simple structure and is easy to realize. Of course, a movement direction of the positioning pin may form an inclined angle relative to a movement direction of the oil guide, instead of being perpendicular to it.

According to a mode of realization, a second return spring is sleeved to the positioning pin. When the oil guide is pushed from the first position towards the second position, the positioning pin moves against a return force exerted by the second return spring. Thus, when the positioning pin is unlocked from the pin slot, the positioning pin returns to an initial position under the effect of the second return spring. Alternatively, the positioning pin can fall back to the initial position by gravity.

According to a mode of realization, the oil guide is provided with a second ramp which abuts against the positioning pin, and the pin slot is arranged at the top of the second ramp. When the oil guide is pushed from the first position towards the second position, the positioning pin is pushed from the bottom of the second ramp towards the top of the second ramp. That is, at its initial position, the positioning pin protrudes downward relative to the housing, and the second ramp is configured to be higher outside and lower inside. Thus, in the oil guide's course of moving inward horizontally, the second ramp may always (or starting from a certain position) abut against the positioning pin. As the upper surface of the second ramp rises gradually, the positioning pin moves upward while opposing the return force of the second return spring, until it engages with the pin slot arranged at the top of the second ramp, thereby locking the oil guide in the second position. Alternatively, the second ramp may not be provided. Instead, an abutting plane is provided to maintain the position pin in a position where it does not protrude during the oil guide's course of sliding, and when the oil guide reaches the second position, the position pin protrudes and inserts into the pin slot.

In the above-described mode of realization, the unlocking assembly is configured to be capable of disengaging the positioning pin from the pin slot. Once the positioning pin disengages from the pin slot, the oil guide will move towards the first position under the effect of the first return spring, and other parts of the discharge assembly will also automatically return to position.

According to a mode of realization, the unlocking assembly is the oil collector and is configured to be capable of moving the oil guide by force under the effect of an external force so as to disengage the positioning pin from the pin slot. The user can operate the oil collector from outside the housing of the fryer by directly exerting a force on it, for example, pulling it outward, so as to move the oil guide by force. While the positioning pin inserted in the pin slot can lock the oil guide in the second position, the engagement between the two can be configured such that when the external force is sufficiently strong, the positioning pin can disengage from the pin slot. A person skilled in the art ca achieve this objective by adjusting the depth and/or shape of the pin slot. Thus, the fryer according to this embodiment allows the unlocking of the oil guide at the same time as pulling out the oil collector. The unlocked oil guide returns to the first position under the effect of the first return spring, thereby closing the spring valve and achieving automatic closing of the oil filter. In other words, the fryer according to this embodiment allows the simultaneity of the pulling out of the oil collector and the closing of the oil filter by one operation. This design ensures that when the oil collector is not in place, the oil filter is necessarily closed, so as to prevent oil leak caused by the inability to correctly close the oil filter due to improper handling in the prior art. It is consistent with utilization logic and simple and convenient to handle.

According to another mode of realization, the unlocking assembly comprises a second button and a driving arm connecting the second button and the oil guide. The driving arm is configured to be capable of moving the oil guide by force under the effect of an external force so as to disengage the positioning pin from the pin slot. In this mode of realization, the user exerts an external force on the driving arm by pressing the second button (i.e., "unlock button") to drive the oil guide to move. In the same way or a similar way as in the preceding embodiment, the engagement between the positioning pin and the pin slot is configured such that they can disengage from each other under the effect of an external force. This mode is easier to operate to some users.

Further, a first end of the driving arm is connected to the second button, and a second end is connected to the oil guide. When the second button is pressed, the driving arm rotates around an axe and pulls the oil guide towards the first position so that the positioning pin disengages from the pin slot. By "a first end of the driving arm is connected to the second button", it does not necessarily mean the two are fixedly connected. In some embodiments, the two can be connected by abutment. According to the present mode of realization, the first end and the second end of the driving arm are located respectively at two sides of the rotation axe. Thus, when the user pushes the second button inward, the oil guide moves outward under the pulling of the second end, i.e., moves towards its first position. This design is consistent with utilization habits. Of course, the second button can also be designed to be capable of directly pulling the driving arm outward and the driving arm directly pulls outward the oil guide.

Further, the unlocking assembly further comprises a third return spring sleeved to the second button. The second button, when pressed, moves against a return force exerted by the third return spring. Thus, when the user releases the second button, it will return to an initial position under the effect of the third return spring, which is convenient to handle and saves efforts. Alternatively, a torsion spring can be arranged at the driving arm so that it may return to an initial state when in unforced state, which also brings the second button back to its initial position.

According to a preferred mode of realization, the oil guide comprises a first ramp, and the spring valve comprises a valve body and an oil filtering spring. When the oil guide slides from its first position towards the second position, the valve body is pushed upward by the first ramp against a return force exerted by the oil filtering spring on the valve body so as to move the spring valve from the closed position to the open position. The first ramp is configured to have an upper surface that is high outside and low inside. When the oil guide is pushed inward, the upper surface of the first ramp rises gradually, pushing the valve body up gradually so as to move it away from a sealed position. Thus, the spring valve moves to the open position.

According to a mode of realization, the pot is removable from the housing, and/or the oil filter is removably mounted at the bottom of the pot. In general, the pot can be placed in and removed through a top opening of the housing. The pot can also be covered by a lid. Preferably, the oil filter is configured to be removable so as to facilitate cleaning and ensure hygiene. The oil filter can comprise a filter mesh used for filtering food residues in the pot.

According to a mode of realization, the oil collector is removable from the housing, and/or the first button and the first return spring are both arranged at the oil collector. For example, the oil collector can be placed in and removed through a lateral opening of the housing. The oil collector is provided with an oil inlet. When the oil collector is placed in position, the oil inlet may be in communication with the oil filter. In another mode of realization, the oil guide is provided with an oil guiding hole. Only when the oil guide is in the second position can oil in the pot flow to the oil inlet via the oil guiding hole. On the contrary, when the oil guide is not in the second position, the oil filter is obstructed by the oil guide and not in communication with the oil inlet of the oil collector. This arrangement can further ensure that only when the user presses the first button to the correct position can oil normally flow into the oil collector. Alternatively, the first button and/or the first return spring can also be arranged at the housing. A person skilled in the art can conceive appropriate structure to control the movement of the oil guide.

It should be understood that the general description above and the following detailed description are merely exemplary and explanatory and cannot limit the present invention. Other characteristics, objectives, and advantages of the present invention will become apparent from the specification, accompanying drawings, and the claims.

The present invention will be described further in detail below in reference to the accompanying drawings. A person skilled in the art can easily understand that the accompanying drawings are merely for the purpose of illustration and not intended to limit the scope of protection of the present invention. The same references in the accompanying drawings represent the same or similar parts. For the sake of clear illustration, those drawings may not be entirely drawn to scale.
Fig. 1 is a schematic overall view of a fryer according to a mode of realization of the present invention, wherein the oil collector is pulled out of the housing;
Fig. 2 is a schematic exploded view of the discharge assembly of the fryer shown in Fig. 1;
Fig. 3A is a partial sectional view A-A of the fryer shown in Fig. 1, wherein the oil guide is located in its first position;
Fig. 3B is a partial sectional view A-A of the fryer shown in Fig. 1, wherein the oil guide is located in its second position;
Fig. 4 is a schematic view in perspective of the oil guide and the first button shown in Fig. 2;
Fig. 5 is a schematic overall view of a fryer according to another mode of realization of the present invention, wherein the oil collector is pulled out of the housing;
Fig. 6 is a schematic exploded view of the discharge assembly of the fryer shown in Fig. 5;
Fig. 7 is a schematic view in perspective of the oil guide and the unlocking assembly shown in Fig. 6.

A person skilled in the art can understand that the following embodiments only aim at describing the technical solutions of the present invention more clearly, and do not constitute any limitation to the scope of protection of the present invention.

**It** should be noted that, when an element is referred to as being "fixed" or "arranged" at another element, it may be directly on the other element, or indirectly on the other element. When an element is referred to as being "connected to" another element, it can be directly connected to the other element, or indirectly connected to the other element.

In addition, the terms "first" and "second" are used for descriptive purposes only and cannot be understood as indicating or implying relative importance or implicitly indicating a number of indicated technical features. Thus, characteristics defined as "first" and "second" may explicitly or implicitly include one or more of these characteristics. In the description of the present application, "plurality" means two or more than two, unless otherwise explicitly and specifically limited. In addition, the terms "inside/outside" and "up/down" are descriptions in reference to an upright position of a cooking utensil itself.

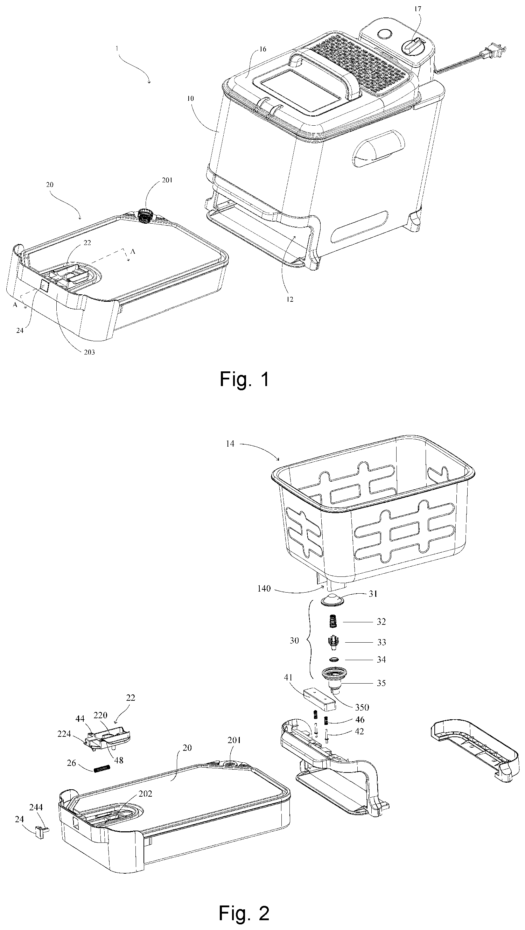

Fig. 1 shows the overall structure of a fryer 1 according to a first mode of realization of the present invention. It comprises a housing 10 having an upper opening for receiving a pot 14. In Fig. 1, the upper opening is closed by a lid. The pot 14 is used for accommodating oil and food material and realizes a cooking step such as frying when heated. The housing 10 also comprises a lateral opening 12. An oil collector 20 is received in the lateral opening 12 and capable of being pulled out. The housing 10 can be provided with a heating controller 17 that controls the temperature and/or duration of heating, for example in the form of a knob.

As shown in Fig. 1, in the present embodiment, the oil collector 20 has an overall shape of a flattened cuboid and is preferably provided with a handle 203 at an outer end (the end visible from outside when received in the housing 10). In addition, the oil collector 20 is provided with an oil inlet 202 at a top face and an openable oil discharge opening 201 used for pouring out used oil held inside the oil collector when necessary. When the oil collector 20 is received in the lateral opening 12 of the housing 10, it is located below the pot 14, with the oil inlet 202 aligned with an oil outlet 140 at the bottom of the pot 14.

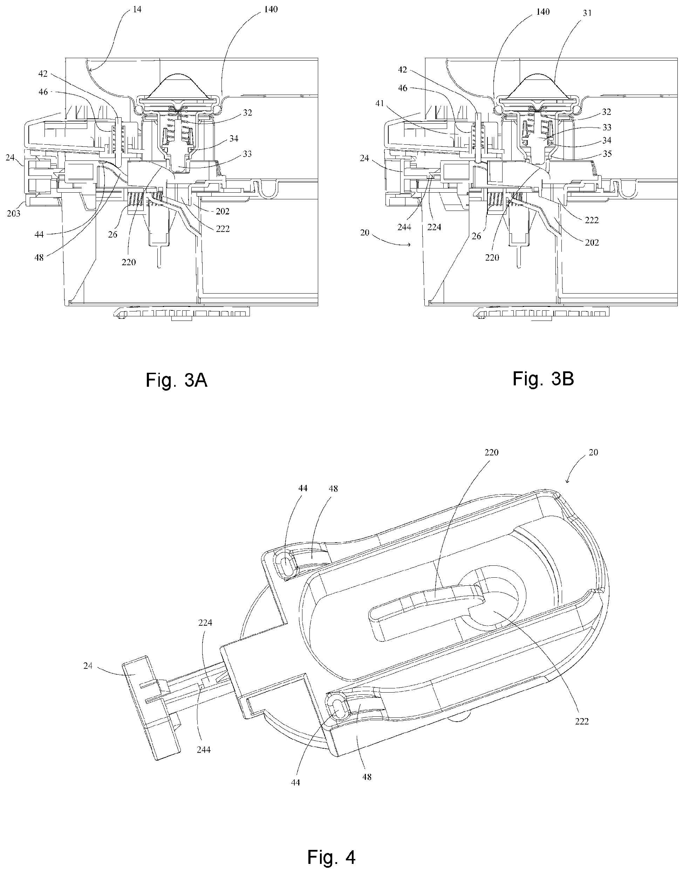

As can be seen more clearly in Fig. 2, a discharge assembly is arranged between the pot 14 and the oil collector 20 in order to achieve controllable discharge of oil inside the pot. Specifically, the discharge assembly comprises an oil filter 30 arranged in the oil outlet 140 of the pot 14, and an oil guide 22 slidably arranged at the upper surface of the oil collector 20. The oil filter 30 comprises a shell 35 and a filtering mesh 31 and a spring valve mounted respectively in the shell 35. The filtering mesh 31 allows filtering food residues in the pot 14 to prevent food residues from entering the spring valve and hindering its movement. The spring valve comprises, from top to bottom, an oil filtering spring 32, a valve body 33, and a sealing ring 34. The oil filtering spring 32 is configured to exert a downward force on the valve body 33 in an unforced state so that the sealing ring 34, sleeved to the valve body 33, closely presses against the inner side of the shell 35 of the oil filter. In other words, the spring valve is overall in a closed position as shown in Fig. 3.

The discharge assembly further comprises a first button 24 and a first return spring 26 respectively connected with the oil guide 22. The upper surface of the oil collector 20 is provided with a sliding groove for mounting the oil guide 22. The outer end of the oil guide 22 is fixedly connected with the first button 24, for example by means of cooperation between a hook 224 and a slot 244. One end of the first return spring 26 is connected with the oil collector 20, and the other end is connected with the oil guide 22. The first return spring 26 is configured to maintain the oil guide 22 in a first position in an unforced state. When a user presses the first button 24 inward, a return force exerted by the first return spring 26 on the oil guide 22 is opposed to, so as to push the oil guide 22 from the first position to a second position located further inward.

As shown in Fig. 4, the oil guide 22 comprises a first ramp 220 and an oil guiding hole 222. The upper surface of the first ramp 220 is configured to be low inside and high outside and is positioned to be capable of engaging with the spring valve at the bottom of the pot 14. To this end, as shown in Fig. 2, the bottom of the shell 35 of the oil filter comprises a lateral incision 350 through which the first ramp 220 can extend so as to engage with the valve body 33. When the oil guide 22 is in the first position, as shown in Fig. 3A, the upper surface of the first ramp 220 is not in contact with the valve body 33 of the spring valve, and the valve body 33 is in a closed position under the effect of the oil filtering spring 32. When the oil guide 22 is pushed by the first button 24 to slide from the first position towards the second position, the first ramp 220 moves inward, and its upper surface comes in contact with the valve body 33 and rises gradually. Thus, the valve body 33 is pushed by the first ramp 220 to move upward and compresses the oil filtering spring 32. As shown in Fig. 3B, due to the upward movement of the valve body 33, the sealing ring 34 leaves its sealing position in which it seals the shell 35 of the oil filter, so that oil in the pot 14 can flow out of the pot 14 via the oil filter 30, passing through the oil guiding hole 222, and flow into the oil collector 20 via the oil inlet 202 of the oil collector, thereby completing an oil filtering operation.

In addition, the discharge assembly further comprises a locking assembly 40 capable of locking the oil guide 22 in the second position. In the present embodiment, the locking assembly 40 comprises a positioning pin 42 arranged at the housing 10 and a pin slot 44 arranged at the oil guide 22. Specifically, above the lateral opening 12, the housing 10 comprises a mobile positioning pin 42 extending downward and capable of moving up and down in a vertical direction. Preferably, the housing 10 comprises a box 41 comprising a cavity used for receiving the positioning pin 42. In the present embodiment, two positioning pins 42 are provided, and a second return spring 46 is sleeved to each positioning pin 42. The two ends of one second return spring 46 abut against respectively the positioning pin 42 and the box 41. The second return springs 46 are configured to maintain the positioning pin 42 in a position in which its bottom end extends out of the box 41 in an unforced state. Correspondingly, the oil guide 22 comprises two pin slots 44. As shown in Figs. 3B and 4, the pin slots 44 are shaped as a depression into which a positioning pin 42 can be inserted. Specifically, the pin slots 44 are positioned so that when the oil guide 22 is moved to the second position, the pin slots 44 are located right below the positioning pins 42, and the oil guide 22 is locked in the second position by insertion of the positioning pins 42 into the pin slots 44.

In the present embodiment, the oil guide 22 further comprises a second ramp 48 arranged at the inner side of the pin slots 44. Its upper surface is high outside and low inside. When the oil guide 22 is pushed to move inward, the second ramp 48 can abut against the downward protruding positioning pin 42 from the beginning, or abut against the positioning pin 42 starting from a certain moment, and then push the positioning pin 42 against the return force of its second return spring 46 to move upward, until the top end of the second ramp 48 reaches the location of the positioning pin 42 where the positioning pin 42 engages with a pin slot 44, thus locking the oil guide 22 in the second position.

The discharge assembly according to the present invention further comprises an unlocking assembly used for unlocking the locking assembly 40 and configured to disengage the positioning pin 42 from the pin slot 44 under the effect of an external force. In the embodiment shown in Figs. 1 to 4, the unlocking assembly is constituted by the oil collector 20 itself. Specifically, a user may directly pull outward the oil collector 20 by the handle 203 located at the outer side of the oil collector 20 so as to move the oil guide 22 by force and disengage the positioning pin 42 from the pin slot 44. To this end, the pin slots 44 are formed as for example relatively shallow slots, or with a more gentle slope at the inner side of the slots, so that under the effect of an appropriate horizontal force, the positioning pin 42 can smoothly disengage from the pin slot 44. Once the positioning pin 42 disengages from the pin slot 44, the oil guide 22 will move outward under the effect of the first return spring 26 and return to the first position. At the same time, the valve body 33 of the spring valve will no longer be subject to the pushing force of the first ramp 220 and will move downward under the effect of the oil filtering spring 32, so that the sealing ring 34 presses the inner side of the shell 35 of the oil filter again and the oil filter 30 returns to its closed position. The positioning pins 42 will also move downward under the effect of the second return spring 46 and return to their initial position. In other words, a user only needs to exert an appropriate outward pulling initial force on the oil collector 20 to disengage the positioning pins 42 from the pin slots 44. All other parts will return to position by themselves, and the operation is simple and requires little effort. In addition, this embodiment realizes the pulling out of the oil collector 20 and the closing of the oil filter 30 at the same time in one single operation, which ensures that the oil filter 30 is always closed when the oil collector 20 is not in position and prevents oil leak due to improper handling.

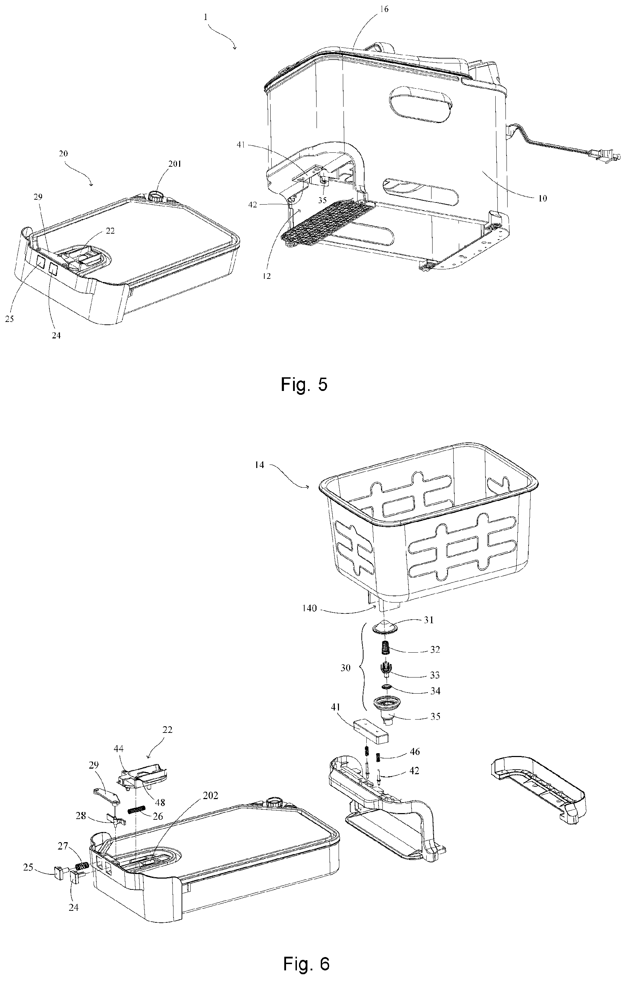

Fig. 5 shows the overall structure of a fryer 1' according to a second mode of realization of the present invention. Similar to Fig. 2, Fig. 6 shows a schematic exploded view of the discharge assembly in this embodiment. Parts having the same structure/function as in the first mode of realization will not be described again. Only parts different from the first mode of realization will be described.

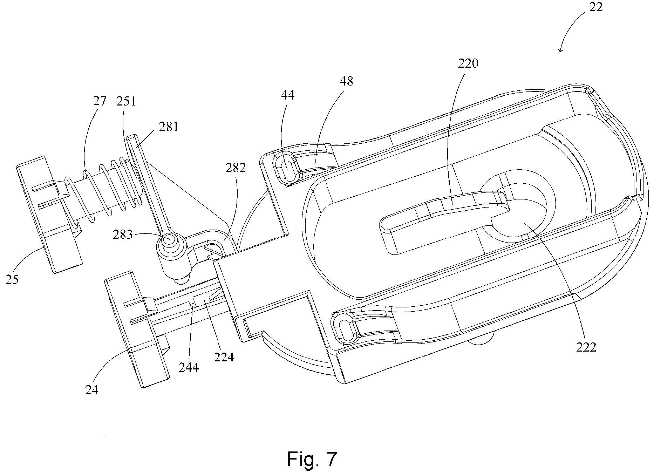

As shown in Figs. 5 and 6, the outer end of the oil collector 20 is provided with a first button 24 and a second button 25. In this embodiment, the function of the first button 24 is the same as in the first mode of realization, i.e., to push the oil guide 22 to reach the second position so as to achieve oil filtering. Therefore, the first button 24 can also be referred to as an "oil filtering button". The second button 25 is used for unlocking the locking assembly 40 so that the oil guide 22 returns to its initial position under the effect of the first return spring 26. Therefore, the second button 25 is also referred to as an "filtering stop button" or "unlock button". As shown in Fig. 7, a third return spring 27 can be sleeved to the second button 25.

The unlocking assembly further comprises a driving arm 28. As more clearly shown in Fig. 7, a first end 281 of the driving arm 28 abuts against an inner end 251 of the button 25, while a second end 282 is connected with the oil guide 22. The driving arm 28 further comprises a rotation axe 283 fixed with a mounting plate 29, so that the driving arm 28 can rotate around the axe. When oil filtering is completed and the second button 25 is pressed by a user, it moves inward against the return force of the third return spring 27. Its inner end 251 will push the first end 281 of the driving arm 28 to move inward. As the rotating axe 283 is fixed with the mounting plate 29, the driving arm 28 will rotate around the axe 283, so that the second end 282 at the other side rotates outward and pulls the oil guide 22 to slide outward, thus disengaging the positioning pin 42 from the pin slot 44 to unlock the locking assembly. When the positioning pin 42 disengages from the pin slot 44, the movement of various parts and corresponding advantages are the same as in the first mode of realization and will not be described again here.

The accompanying drawings and the above description describe specific, non-limiting embodiments of the present invention. In order to teach inventive principles, some conventional aspects have been simplified or omitted. A person skilled in the art should understand that modifications derived from these embodiments fall within the scope of the present invention. A person skilled in the art should understand that the characteristics described above can be combined in various ways to form multiple variations of the present invention. Thus, the present invention is not limited to the specific embodiments described above, but only by the claims.

## Claims

1. A fryer (1) comprising a housing (10), and a pot (14) and an oil collector (20) respectively arranged in the housing, the oil collector (20) being arranged below the pot (14), a discharge assembly being arranged between the pot (14) and the oil collector (20),
wherein the discharge assembly comprises:
- an oil filter (30) arranged at the bottom of the pot (14) and comprising a spring valve having an open position and a closed position;
- an oil guide (22) arranged on the oil collector (20) and slidingly connected with the oil collector (20), **characterized in that** the oil guide (22) is capable of moving the spring valve from the closed position to the open position when sliding from a first position to a second position;
wherein the discharge assembly further comprises:
- a first button (24) and a first return spring (26) respectively connected with the oil guide (22), when being pressed, the first button (24) being capable of pushing the oil guide (22) from the first position to the second position by opposing a return force exerted by the first return spring (26) on the oil guide (22);
- a locking assembly (40) used for locking the oil guide (22) in the second position;
- an unlocking assembly used for unlocking the locking assembly (40).

2. The fryer according to claim 1, **characterized in that**, the locking assembly (40) comprises a positioning pin (42) arranged at the housing (10) and a pin slot (44) arranged at the oil guide (22), the positioning pin (42) being configured to move when the oil guide (22) moves, and to engage in the pin slot (44) when the oil guide (22) arrives at the second position so as to lock the oil guide (22) in the second position.

3. The fryer according to claim 2, **characterized in that**, the movement direction of the positioning pin (42) is perpendicular to the movement direction of the oil guide (22).

4. The fryer according to claim 2 or 3, **characterized in that**, a second return spring (46) is sleeved to the positioning pin (42), when the oil guide (22) being pushed from the first position towards the second position, the positioning pin (42) moves against a return force exerted by the second return spring (46).

5. The fryer according to any one of claims 2 to 4, **characterized in that**, the oil guide (22) is provided with a second ramp (48) which abuts against the positioning pin (42), and the pin slot (44) is arranged at the top of the second ramp (48), the positioning pin (42) being pushed from the bottom of the second ramp (48) towards the top of the second ramp (48) when the oil guide (22) is pushed from the first position towards the second position.

6. The fryer according to any one of claims 2 to 5, **characterized in that**, the unlocking assembly is configured to be capable of disengaging the positioning pin (42) from the pin slot (44).

7. The fryer according to claim 6, **characterized in that**, the unlocking assembly is the oil collector (20) and is configured to be capable of moving the oil guide (22) by force under the effect of an external force so as to disengage the positioning pin (42) from the pin slot (44).

8. The fryer according to claim 6, **characterized in that**, the unlocking assembly comprises a second button (25) and a driving arm (28) connecting the second button (25) and the oil guide (22), the driving arm (28) being configured to be capable of moving the oil guide (22) by force under the effect of an external force so as to disengage the positioning pin (42) from the pin slot (44).

9. The fryer according to claim 8, **characterized in that**, a first end (281) of the driving arm (28) is connected to the second button (25), and a second end (282) is connected to the oil guide (22), and **in that**, when the second button (25) is pressed, the driving arm (28) rotating around an axe and pulling the oil guide (22) towards the first position so that the positioning pin (42) disengages from the pin slot (44).

10. The fryer according to claim 9, **characterized in that**, the unlocking assembly further comprises a third return spring (27) sleeved to the second button (25), when the second button (25) is pressed,, it moves against a return force exerted by the third return spring (27).

11. The fryer according to any one of claims 1 to 10, **characterized in that**, the oil guide comprises a first ramp (220), and the spring valve comprises a valve body (33) and an oil filtering spring (32), the valve body (33) being pushed upward by the first ramp (220) against a return force exerted by the oil filtering spring (32) on the valve body (33) so as to move the spring valve from the closed position to the open position when the oil guide (22) slides from its first position towards the second position.

12. The fryer according to any one of claims 1 to 11, **characterized in that**, the pot (14) is removable from the housing (10), and/or the oil filter is removably mounted at the bottom of the pot (14).

13. The fryer according to any one of claims 1 to 12, **characterized in that**, the oil collector (20) is removable from the housing, and/or the first button (24) and the first return spring (26) are both arranged at the oil collector (20).

## Patentansprüche

1. Fritteuse (1) mit einem Gehäuse (10) und einem Topf (14) und einem Ölsammler (20), die jeweils in dem Gehäuse angeordnet sind, wobei der Ölsammler (20) unterhalb des Topfes (14) angeordnet ist, wobei eine Auslassanordnung zwischen dem Topf (14) und dem Ölsammler (20) angeordnet ist, wobei die Auslassanordnung aufweist:
- einen Ölfilter (30), der am Boden des Topfes (14) angeordnet ist und ein Federventil mit einer offenen und einer geschlossenen Position aufweist;
- eine Ölführung (22), die an dem Ölsammler (20) angeordnet und gleitend mit dem Ölsammler (20) verbunden ist, **dadurch gekennzeichnet, dass** die Ölführung (22) in der Lage ist, das Federventil von der geschlossenen Position in die offene Position zu bewegen, wenn sie von einer ersten Position in eine zweite Position gleitet;
wobei die Auslassbaugruppe ferner Folgendes aufweist:
- einen ersten Knopf (24) und eine erste Rückstellfeder (26), die jeweils mit der Ölführung (22) verbunden sind, wenn sie gedrückt werden, wobei der erste Knopf (24) in der Lage ist, die Ölführung (22) von der ersten Position in die zweite Position zu schieben, indem er einer Rückstellkraft entgegenwirkt, die von der ersten Rückstellfeder (26) auf die Ölführung (22) ausgeübt wird;
- eine Verriegelungsbaugruppe (40), die zum Verriegeln der Ölführung (22) in der zweiten Position dient;
- eine Entriegelungsbaugruppe, die zum Entriegeln der Verriegelungsbaugruppe (40) dient.

2. Fritteuse nach Anspruch 1, **dadurch gekennzeichnet, dass** die Verriegelungsbaugruppe (40) einen am Gehäuse (10) angeordneten Positionierungsstift (42) und einen an der Ölführung (22) angeordneten Stiftschlitz (44) aufweist, wobei der Positionierungsstift (42) so konfiguriert ist, dass er sich bewegt, wenn sich die Ölführung (22) bewegt, und dass er in den Stiftschlitz (44) eingreift, wenn die Ölführung (22) in der zweiten Position ankommt, um die Ölführung (22) in der zweiten Position zu verriegeln.

3. Fritteuse nach Anspruch 2, **dadurch gekennzeichnet, dass** die Bewegungsrichtung des Positionierungsstifts (42) senkrecht zur Bewegungsrichtung der Ölführung (22) verläuft.

4. Fritteuse nach Anspruch 2 oder 3, **dadurch gekennzeichnet, dass** eine zweite Rückstellfeder (46) mit dem Positionierungsstift (42) verbunden ist, wobei sich der Positionierungsstift (42) gegen eine von der zweiten Rückstellfeder (46) ausgeübte Rückstellkraft bewegt, wenn die Ölführung (22) aus der ersten Position in die zweite

5. Fritteuse nach einem der Ansprüche 2 bis 4, **dadurch gekennzeichnet, dass** die Ölführung (22) mit einer zweiten Rampe (48) versehen ist, die an dem Positionierungsstift (42) anliegt, und der Stiftschlitz (44) an der Oberseite der zweiten Rampe (48) angeordnet ist, wobei der Positionierungsstift (42) von der Unterseite der zweiten Rampe (48) zur Oberseite der zweiten Rampe (48) geschoben wird, wenn die Ölführung (22) von der ersten Position zur zweiten Position geschoben wird.

6. Fritteuse nach einem der Ansprüche 2 bis 5, **dadurch gekennzeichnet, dass** die Entriegelungsbaugruppe so konfiguriert ist, dass sie in der Lage ist, den Positionierungsstift (42) aus dem Stiftschlitz (44) zu lösen.

7. Fritteuse nach Anspruch 6, **dadurch gekennzeichnet, dass** die Entriegelungseinheit der Ölsammler (20) ist und so konfiguriert ist, dass sie in der Lage ist, die Ölführung (22) unter der Einwirkung einer äußeren Kraft zu bewegen, um den Positionierungsstift (42) aus dem Stiftschlitz (44) zu lösen.

8. Fritteuse nach Anspruch 6, **dadurch gekennzeichnet, dass** die Entriegelungsbaugruppe einen zweiten Knopf (25) und einen Antriebsarm (28) aufweist, der den zweiten Knopf (25) und die Ölführung (22) verbindet, wobei der Antriebsarm (28) so konfiguriert ist, dass er die Ölführung (22) unter der Einwirkung einer äußeren Kraft bewegen kann, um den Positionierungsstift (42) aus dem Stiftschlitz (44) zu lösen.

9. Fritteuse nach Anspruch 8, **dadurch gekennzeichnet, dass** ein erstes Ende (281) des Antriebsarms (28) mit dem zweiten Knopf (25) und ein zweites Ende (282) mit der Ölführung (22) verbunden ist, und dass, wenn der zweite Knopf (25) gedrückt wird, sich der Antriebsarm (28) um eine Achse dreht und die Ölführung (22) in die erste Position zieht, so dass der Positionierungsstift (42) aus dem Stiftschlitz (44) gelöst wird.

10. Fritteuse nach Anspruch 9, **dadurch gekennzeichnet, dass** die Entriegelungseinheit außerdem eine dritte Rückstellfeder (27) aufweist, die mit dem zweiten Knopf (25) verbunden ist, und dass sich der zweite Knopf (25), wenn er gedrückt wird, gegen eine Rückstellkraft bewegt, die von der dritten Rückstellfeder (27) ausgeübt wird.

11. Fritteuse nach einem der Ansprüche 1 bis 10, **dadurch gekennzeichnet, dass** die Ölführung eine erste Rampe (220) aufweist und das Federventil einen Ventilkörper (33) und eine Ölfilterfeder (32) aufweist, wobei der Ventilkörper (33) durch die erste Rampe (220) gegen eine von der Ölfilterfeder (32) auf den Ventilkörper (33) ausgeübte Rückstellkraft nach oben gedrückt wird, um das Federventil aus der geschlossenen Stellung in die offene Stellung zu bewegen, wenn die Ölführung (22) aus ihrer ersten Stellung in die zweite Stellung gleitet.

12. Fritteuse nach einem der Ansprüche 1 bis 11, **dadurch gekennzeichnet, dass** der Topf (14) vom Gehäuse (10) abnehmbar ist und/oder der Ölfilter abnehmbar am Boden des Topfes (14) angebracht ist.

13. Fritteuse nach einem der Ansprüche 1 bis 12, **dadurch gekennzeichnet, dass** der Ölsammler (20) vom Gehäuse abnehmbar ist und/oder der erste Knopf (24) und die erste Rückstellfeder (26) beide am Ölsammler (20) angeordnet sind.

## Revendications

1. Une friteuse (1) comprenant un boîtier (10), une cuve (14) et un collecteur d'huile (20) chacun agencés dans le boîtier, le collecteur d'huile (20) étant agencé sous la cuve (14), un ensemble de décharge étant agencé entre la cuve (14) et le collecteur d'huile (20),
l'ensemble de décharge comprenant :
- un filtre à huile (30) agencé au fond de la cuve (14) et comprenant une vanne à ressort ayant une position d'ouverture et une position de fermeture ;
- un guide d'huile (22) agencé sur le collecteur d'huile (20) et relié de manière coulissante au collecteur d'huile (20), **caractérisé en ce que** le guide d'huile (22) est apte à déplacer la vanne à ressort de la position de fermeture à la position d'ouverture lorsqu'il coulisse d'une première position à une deuxième position ;
l'ensemble de décharge comprenant en outre :
- un premier bouton (24) et un premier ressort de rappel (26) reliés chacun au guide d'huile (22), le premier bouton (24) étant apte, lorsqu'il est enfoncé, à pousser le guide d'huile (22) de la première position à la deuxième position en s'opposant à une force de rappel exercée par le premier ressort de rappel (26) sur le guide d'huile (22) ;
- un ensemble de verrouillage (40) utilisé pour verrouiller le guide d'huile (22) dans la deuxième position ;
- un ensemble de déverrouillage utilisé pour déverrouiller l'ensemble de verrouillage (40).

2. La friteuse selon la revendication 1, **caractérisée en ce que** l'ensemble de verrouillage (40) comprend un pion de positionnement (42) agencé sur le boîtier (10) et une fente pour pion (44) agencée sur le guide d'huile (22), le pion de positionnement (42) étant conçu de façon à se déplacer lorsque le guide d'huile (22) se déplace, et à s'engager dans la fente pour pion (44) lorsque le guide d'huile (22) arrive dans la deuxième position afin de verrouiller le guide d'huile (22) dans la deuxième position.

3. La friteuse selon la revendication 2, **caractérisée en ce que** la direction de déplacement du pion de positionnement (42) est perpendiculaire à la direction de déplacement du guide d'huile (22).

4. La friteuse selon la revendication 2 ou la revendication 3, **caractérisée en ce qu'**un deuxième ressort de rappel (46) est engagé sur le pion de positionnement (42), de sorte que, lorsque le guide d'huile (22) est poussé de la première position à la deuxième position, le pion de positionnement (42) se déplace à l'encontre d'une force de rappel exercée par le deuxième ressort de rappel (46).

5. La friteuse selon l'une quelconque des revendications 2 à 4, **caractérisée en ce que** le guide d'huile (22) est muni d'une deuxième rampe (48) qui vient en butée contre le pion de positionnement (42), et la fente pour pion (44) est ménagée au sommet de la deuxième rampe (48), le pion de positionnement (42) étant poussé depuis le bas de la deuxième rampe (48) vers le haut de la deuxième rampe (48) lorsque le guide d'huile (22) est poussé de la première position à la deuxième position.

6. La friteuse selon l'une quelconque des revendications 2 à 5, **caractérisée en ce que** l'ensemble de déverrouillage est configuré de manière à être apte à désengager le pion de positionnement (42) d'avec la fente pour pion (44).

7. La friteuse selon la revendication 6, **caractérisée en ce que** l'ensemble de déverrouillage est le collecteur d'huile (20) et est configuré de façon à être apte à déplacer le guide d'huile (22) de manière forcée sous l'effet d'une force externe de manière à désengager le pion de positionnement (42) d'avec la fente pour pion (44).

8. La friteuse selon la revendication 6, **caractérisée en ce que** l'ensemble de déverrouillage comprend un deuxième bouton d'huile (25) et un bras d'entraînement (28) reliant le deuxième bouton (25) et le guide (22), le bras d'entraînement (28) étant configuré pour être apte à déplacer le guide d'huile (22) de manière forcée sous l'effet d'une force externe, afin de désengager le pion de positionnement (42) d'avec la fente pour pion (44).

9. La friteuse selon la revendication 8, **caractérisée en ce qu'**une première extrémité (281) du bras d'entraînement (28) est reliée au deuxième bouton (25) et une deuxième extrémité (282) est reliée au guide d'huile (22), et **en ce que**, lorsque le deuxième bouton (25) est enfoncé, le bras d'entraînement (28) tourne autour d'un axe et tire le guide d'huile (22) vers la première position de sorte que le pion de positionnement (42) se désengage d'avec la fente pour pion (44).

10. La friteuse selon la revendication 9, **caractérisée en ce que** l'ensemble de déverrouillage comprend en outre un troisième ressort de rappel (27) engagé sur le deuxième bouton (25), qui, lorsque le deuxième bouton (25) est enfoncé, est déplacé à l'encontre d'une force de rappel exercée par le troisième ressort de rappel (27).

11. La friteuse selon l'une quelconque des revendications 1 à 10, **caractérisée en ce que** le guide d'huile comprend une première rampe (220), et la vanne à ressort comprend un corps de vanne (33) et un ressort (32) de filtrage d'huile, le corps de vanne (33) étant poussé vers le haut par la première rampe (220) à l'encontre d'une force de rappel exercée par le ressort (32) de filtrage d'huile sur le corps de vanne (33) de manière à déplacer la vanne à ressort de la position de fermeture à la position d'ouverture lorsque le guide d'huile (22) coulisse de sa première position vers la deuxième position.

12. La friteuse selon l'une quelconque des revendications 1 à 11, **caractérisée en ce que** la cuve (14) est amovible du boîtier (10) et/ou le filtre à huile est monté de manière amovible au fond de la cuve (14).

13. La friteuse selon l'une quelconque des revendications 1 à 12, **caractérisée en ce que** le collecteur d'huile (20) est amovible par rapport au boîtier, et/ou le premier bouton (24) et le premier ressort de rappel (26) sont tous deux agencés au niveau du collecteur d'huile (20).
